# EUROPEAN PATENT APPLICATION

(11) **EP 4 794 104 A1**
(43) Date of publication of application: **19.08.2026**
(21) Application number: 26157504.7
(22) Date of filing: 10.02.2026
(51) Int. Cl.: H01M 50/531, H01M 50/533

(54) **ELECTRODE SHEET AND SECONDARY BATTERY**

(30) Priority: 18.02.2025 CN 202520264594 U
(71) Applicant: AESC Japan Ltd., Yokohama-shi, Kanagawa 220-0012 (JP)
(72) Inventor: DAI, Liangzhen, Jiangyin City, Wuxi City (CN); CHEN, Shenghua, Jiangyin City, Wuxi City (CN); KONG, Deyong, Jiangyin City, Wuxi City (CN); ZHANG, Shuhan, Jiangyin City, Wuxi City (CN); CHEN, Lipeng, Jiangyin City, Wuxi City (CN); YIN, Zhe, Jiangyin City, Wuxi City (CN)
(74) Representative: Becker, Eberhard

(57) **Abstract**

An electrode sheet (100) includes a current collector (10) including a current collector body (12) and a tab (14) extending from the current collector body (12) along a first direction (d); an active material layer (20) disposed on at least one side of the current collector (10) in a thickness direction; and a reinforcement rib (30). The tab (14) has a tab bare foil region (40) where the active material layer (20) is not disposed. In the first direction (d), the reinforcement rib (30) continuously extends from the tab bare foil region (40) to a surface of the active material layer (20). The disclosure provides an electrode sheet (100) and a secondary battery (1300) to at least achieve avoiding tab folding.

## Description

### Technical Field

The disclosure relates to an electrode sheet and a secondary battery.

### Description of Related Art

In a field of new energy power batteries, an application of secondary batteries is becoming more and more widespread. For example, the secondary batteries (such as lithium-ion batteries) may be applied to electronic devices such as vehicles, energy storage, mobile phones, tablet computers, wearable devices, power banks, electronic cigarettes, digital products, power tools, power devices, energy storage devices. In the secondary batteries, copper foil and aluminum foil are generally used as current collectors thereof, and after die cutting, tabs are prone to issues such as bending, wrinkling, and folding.

### SUMMARY

### Technical problem

For the issues existing in the related art, the disclosure provides an electrode sheet and a secondary battery to at least achieve avoiding tab folding.

### Solution to Problem

In order to address the above issues, an embodiment of the disclosure provides an electrode sheet, including: a current collector including a current collector body and a tab extending from the current collector body along a first direction; an active material layer disposed on at least one side of the current collector in a thickness direction; and a reinforcement rib. The tab has a tab bare foil region where the active material layer is not disposed. In the first direction, the reinforcement rib continuously extends from the tab bare foil region to a surface of the active material layer.

In some embodiments, a ratio of a width of the reinforcement rib in a direction perpendicular to an extension path thereof to a depth of the reinforcement rib recessed on the tab is a, where 6.67 ≥ a ≥ 1.1.

In some embodiments, along the first direction, the tab sequentially has a tab coating region directly connected to the current collector body and the tab bare foil region directly connected to the tab coating region, the active material layer is further disposed above a surface of the tab coating region, and the reinforcement rib continuously extends from the tab bare foil region to a portion of the active material layer located on the tab coating region.

In some embodiments, the tab bare foil region is directly connected to the current collector body, and the reinforcement rib continuously extends from the tab bare foil region to a portion of the active material layer located on the current collector body.

In some embodiments, along the first direction, a size of the tab coating region is d1, and a size of the tab is d3, where 0.15 ≥ d1/d3 ≥ 0.02.

In some embodiments, along the first direction, a size of the tab coating region is d1, the reinforcement rib is spaced apart from a portion of the active material layer located on the current collector body, and a spacing distance is d2, where 0.95 ≥ d2/d1 ≥ 0.1.

In some embodiments, 0.5 ≥ d2/d1 ≥ 0.2.

In some embodiments, the electrode sheet further includes: a conductive layer covering a surface of the current collector and located between the active material layer and the current collector. The active material layer has a first portion coated on a surface of the conductive layer and a second portion extending beyond the conductive layer along the first direction, the second portion is coated on the surface of the current collector, and the reinforcement rib continuously extends from the tab bare foil region to a surface of the second portion, and continuously extends from the surface of the second portion to a surface of the first portion.

In some embodiments, a ratio of a depth of the reinforcement rib recessed on the active material layer to a thickness from a thickness of the active material layer is f, where 0.85 ≥ f ≥ 0.3.

In some embodiments, a first edge of the tab is connected to the current collector body, and a second edge of the tab and the first edge are disposed on two sides of the tab in the first direction; each of the reinforcement ribs has at least one first bending portion and at least one second bending portion, the first bending portion and the second bending portion are alternately disposed in a tab width direction and are connected to each other through a connecting portion, and the tab width direction is perpendicular to the first direction. The first bending portion and the second bending portion are arc transitions, an inner angle of the first bending portion faces toward the first edge, and an inner angle of the second bending portion faces toward the second edge; a maximum width of the arc transition in a radial direction is y1, and a width of the connecting portion perpendicular to an extension direction of the connecting portion is y2, where 2.5 ≥ y1/y2 ≥ 1.2.

In some embodiments, a spacing between vertices of the two adjacent first bending portions of the single reinforcement rib is b. In the tab width direction, the tab has a maximum width c1 and a minimum width c2, where 3 ≥ c1/b ≥ 1.5, and/or 3 ≥ c2/b ≥ 1.5.

An embodiment of the disclosure further provides a secondary battery, including: a casing having at least one opening; at least one cover plate assembly including a cover plate body and an electrode post disposed on the cover plate body, in which the cover plate body closes the opening and forms an accommodating cavity with the casing; an electrode assembly disposed in the accommodating cavity, in which the electrode assembly includes the electrode sheet, the tab bare foil region includes a welding region and a bending region, the welding region is welded to the electrode post, or welded to an adapter plate electrically connected to the electrode post, and the bending region is located between the welding region and the current collector body. Along a height direction of the secondary battery, the bending region is spaced apart from the active material layer.

In some embodiments, along the height direction of the secondary battery, a spacing distance between the bending region and the active material layer is d4, where10 mm ≥ d4 ≥ 4 mm.

### Technical effect

In the embodiments of the disclosure, the continuous reinforcement ribs are formed in the tab bare foil region and the active material layer, which may enable the tab bare foil region and the active material layer to be connected into a whole under the force of the reinforcement rib, avoiding forming a weak portion at a junction of the tab bare foil region and the active material layer, causing the tab to be folded at the weak portion.

### BRIEF DESCRIPTION OF THE DRAWINGS

In order to more clearly illustrate the technical solutions in the embodiments of the disclosure or the related art, the accompanying drawings required to be used in the description of the embodiments or the related art will be briefly introduced below. Obviously, the accompanying drawings in the following description are some embodiments of the disclosure. For those of ordinary skill in the art, other drawings may also be obtained according to these drawings without creative effort.
FIG. 1 shows a schematic view of an electrode sheet after a reinforcement rib is formed thereon according to the first embodiment of the disclosure.
FIG. 2 shows a schematic view of an electrode sheet after a die cutting process according to the first embodiment of the disclosure.
FIG. 3 shows a schematic view of an electrode sheet after a reinforcement rib is formed thereon according to the second embodiment of the disclosure.
FIG. 4 shows a schematic view of an electrode sheet after a die cutting process according to the second embodiment of the disclosure.
FIG. 5 shows an enlarged view of a region A in FIG. 4.
FIG. 6 shows a cross-sectional view taken along a line B-B of FIG. 4.
FIG. 7 shows a schematic view of an electrode sheet after a reinforcement rib is formed thereon according to the third embodiment of the disclosure.
FIG. 8 shows a schematic view of an electrode sheet after a die cutting process according to the third embodiment of the disclosure.
FIG. 9 shows a schematic view of a tab in FIG. 5.
FIG. 10 shows a schematic partial enlarged view of a portion of a fold line portion in FIG. 9.
FIG. 11 shows a schematic view of a tab according to another embodiment of the disclosure.
FIG. 12 shows an embodiment different from FIG. 11.
FIG. 13 shows a perspective view of a secondary battery according to an embodiment of the disclosure.
FIG. 14 shows a partial perspective view of an electrode assembly according to an embodiment of the disclosure.
FIG. 15 shows a cross-sectional view of a secondary battery according to an embodiment of the disclosure.
FIG. 16 shows a schematic view when an electronic device in the embodiment of the disclosure is a vehicle.

### DETAILED DESCRIPTION OF DISCLOSED EMBODIMENTS

For a better understanding of the spirit of the embodiments of the disclosure, the following further description is provided in conjunction with some preferred embodiments of the disclosure.

The embodiments of the disclosure will be described in detail below. Throughout the specification of the disclosure, the same or similar components and components having the same or similar functions are denoted by similar reference numerals. The embodiments described herein with reference to the accompanying drawings are illustrative and graphical in nature and are used to provide a basic understanding of the disclosure. The embodiments of the disclosure should not be construed as limitations on the disclosure.

As used herein, the terms "approximately", "generally", "substantially", and "about" are used to describe and illustrate small variations. When used in conjunction with an event or circumstance, the terms may refer to instances in which the event or circumstance occurs precisely as well as instances in which the event or circumstance occurs in close approximation.

In this specification, unless otherwise specified or limited, relative terms, such as "central", "longitudinal", "lateral", "front", "rear", "right", "left", "internal", "external", "lower", "higher", "horizontal", "vertical", "above", "below", "upper", "lower", "top", "bottom", and derivative terms thereof (such as "horizontally", "downwardly", "upwardly", etc.) should be interpreted as referring to a direction described in the discussion or shown in the accompanying drawings. These relative terms are only used for convenience of description and do not require the disclosure to be constructed or operated in a particular direction.

For convenience of description, "first", "second", "third", etc. may be used herein to distinguish different components of a drawing or a series of drawings. "First", "second", "third", etc. are not intended to describe corresponding components.

After a die cutting process, an electrode sheet is required to be wound into a large roll first. During a winding process, since a tab is relatively soft, it is very likely that the tab may be folded and inserted into a winding core to overlap with an electrode sheet body. The folded tab will subsequently enter into an interior of a battery along with a processing process, which may cause an increase in internal resistance. More seriously, the folded tab inserted into the winding core may conduct positive and negative electrodes to cause a short circuit, affecting safety performance of the battery.

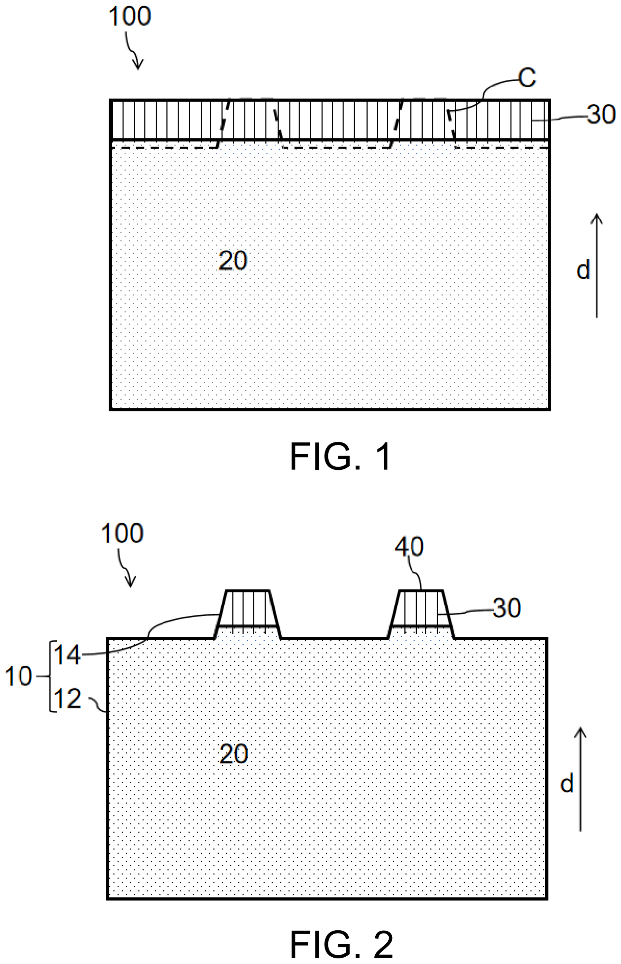

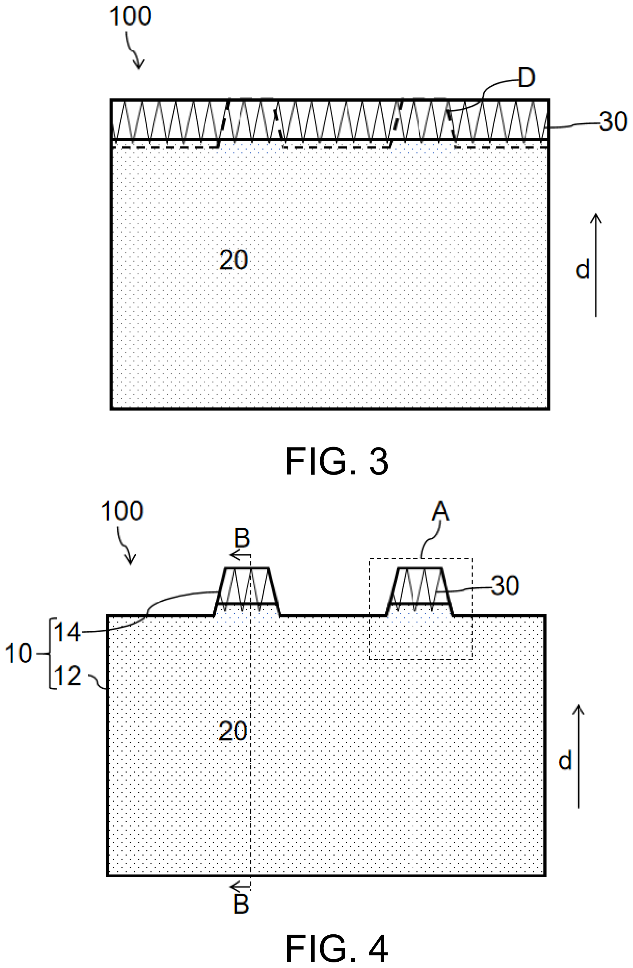

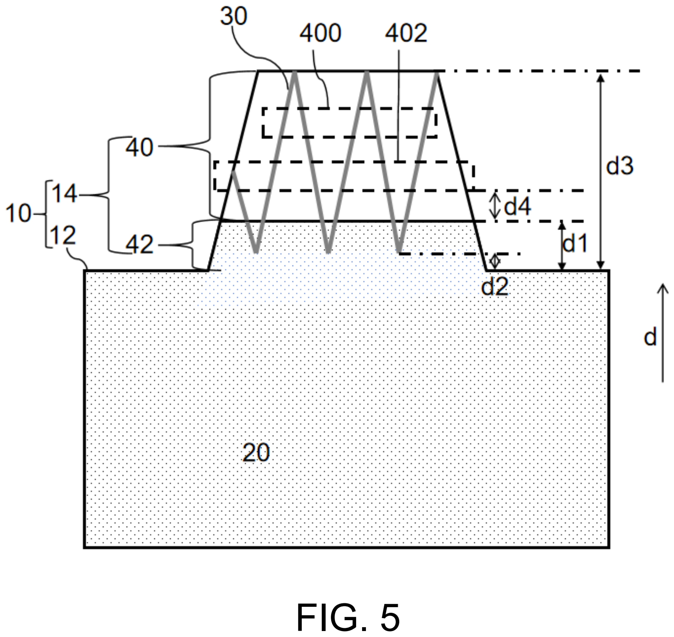

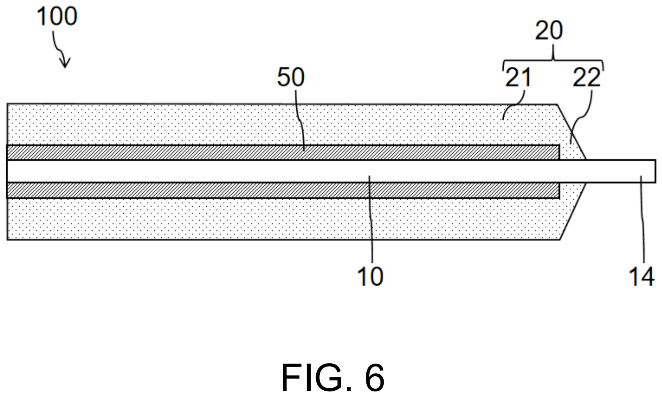

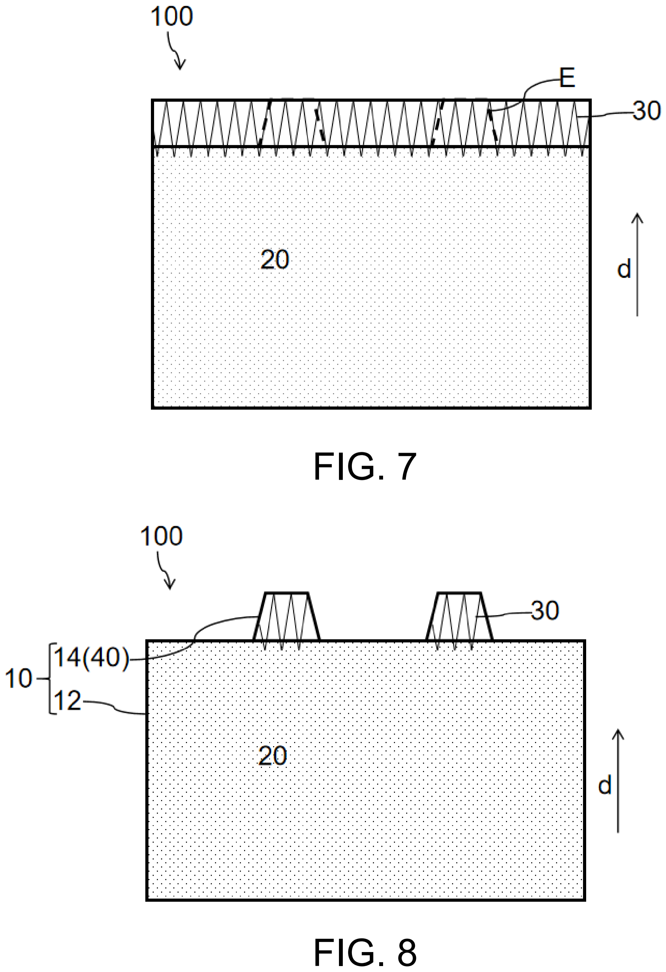

FIG. 1 shows a schematic view of an electrode sheet 100 after a reinforcement rib 30 is formed thereon according to the first embodiment of the disclosure. FIG. 2 shows a schematic view of the electrode sheet 100 after a die cutting process according to the first embodiment of the disclosure, in which die cutting is performed along a dashed line C in FIG. 1. FIG. 3 shows a schematic view of the electrode sheet 100 after the reinforcement rib 30 is formed thereon according to the second embodiment of the disclosure. FIG. 4 shows a schematic view of the electrode sheet 100 after the die cutting process according to the second embodiment of the disclosure, in which the die cutting is performed along a dashed line D in FIG. 3. FIG. 5 shows an enlarged view of a region A in FIG. 4. FIG. 6 shows a cross-sectional view taken along a line B-B of FIG. 4. FIG. 7 shows a schematic view of the electrode sheet 100 after the reinforcement rib 30 is formed thereon according to the third embodiment of the disclosure. FIG. 8 shows a schematic view of the electrode sheet 100 after the die cutting process according to the third embodiment of the disclosure, in which the die cutting is performed along a dashed line E in FIG. 7.

In the first to third embodiments of the disclosure, the electrode sheet 100 is provided. The electrode sheet 100 includes a current collector 10 and an active material layer 20. The active material layer 20 is disposed on two sides of the current collector 10 in a thickness direction. The current collector 10 includes a current collector body 12 and a tab 14 extending from the current collector body 12 along a first direction d. The active material layer 20 is at least coated on a surface of the current collector body 12. The tab 14 has a tab bare foil region 40 where the active material layer 20 is not disposed. In the first direction d, the reinforcement rib (which may also be referred to as an embossment) 30 continuously extends from the tab bare foil region 40 to a surface of one of the two active material layers 20 on the current collector 10 in the thickness direction, so as to support the tab 14. In the embodiments of the disclosure, the continuous reinforcement ribs 30 are formed on the tab bare foil region 40 and the active material layer 20, which may enable the tab bare foil region 40 and the active material layer 20 to be connected into a whole under the force of the reinforcement rib 30, avoiding formation of a weak portion at a junction of the tab bare foil region 40 and the active material layer 20, which causes the tab 14 to be folded at the weak portion. At the same time, by utilizing the support of the active material layer 20 to a root of the tab 14, the tab bare foil region 40 and the active material layer 20 are connected into a whole under the force of the reinforcement rib 30, improving overall bending resistance of the tab 14.

In some embodiments not shown in the drawings, the active material layer 20 is disposed on one of surfaces of the current collector 10 in the thickness direction, and the reinforcement rib 30 continuously extends from the tab bare foil region 40 to the active material layer 20.

A ratio of a width of the reinforcement rib 30 in a direction perpendicular to an extension path thereof to a depth of the reinforcement rib 30 recessed on the tab 14 is a, where 6.67 ≥ a ≥ 1.1. If a is greater than 6.67, the depth of the reinforcement rib 30 recessed on the tab 14 is too small, which may not ensure a strengthening effect on the tab 14. If a is less than 1.1, the width of the reinforcement rib 30 is too small, and there is a risk of crushing the tab 14.

In the first to third embodiments, the electrode sheet 100 may be a negative electrode sheet, and the current collector 10 is, for example, a copper foil. For example, referring to the enlarged view, FIG. 5, in the second embodiment, the reinforcement rib 30 continuously extends from the tab bare foil region 40 to the surface of the active material layer 20.

Referring to FIG. 1 and FIG. 2, in the first embodiment of the disclosure, the stripe-shaped reinforcement rib in the related art is improved. Compared to the related art (the reinforcement rib is only located in the tab bare foil region), the reinforcement rib 30 in the first embodiment of the disclosure continuously extends from the tab bare foil region 40 to the surface of the active material layer 20. First, a region where the active material layer 20 is located includes not only the current collector (foil) 10, but also the active material layer 20 on the surface thereof, so a thickness is greater, and it is less likely to be bent, enabling strength of the active material layer 20 to be relied on to strengthen the entire tab 14, avoiding formation of a weak portion between the reinforcement rib 30 and the active material layer 20, which causes the tab 14 to be folded from the weak portion. Second, by relying on a strengthening effect of the active material layer 20, strengthening regions of the stripe-shaped reinforcement ribs 30 may be connected into a whole, increasing the strengthening effect on the tab 14.

In the second to third embodiments, for example, referring to the enlarged view, FIG. 5, in the second embodiment, a difference from the first embodiment includes that the reinforcement rib 30 is W-shaped. On one hand, stability of a triangle may be utilized, and on the other hand, the W-shaped reinforcement ribs 30 are connected into a whole, and the strengthening effect on the tab 14 is better than that of the stripe-shaped reinforcement ribs 30 in the first embodiment.

In the first and second embodiments, for example, referring to the enlarged view, FIG. 5, in the second embodiment, along the first direction d, the tab 14 sequentially has a tab coating region 42 directly connected to the current collector body 12 and the tab bare foil region 40 directly connected to the tab coating region 42. The active material layer 20 is disposed above the current collector body 12, and the active material layer 20 is further disposed above a surface of the tab coating region 42. The reinforcement rib 30 continuously extends from the tab bare foil region 40 to a surface of a portion of the active material layer 20 located on the tab coating region 42. The active material layer 20 is disposed in the tab coating region 42 of the tab 14. Compared to the embodiment where the tab 14 is completely the tab bare foil region 40, the active material layer 20 may provide strengthening to the root of the tab 14, preventing the entire tab 14 from being folded. Along the first direction d, a size of the tab coating region 42 (that is, a height of the active material layer 20 located on the tab 14) is d1, and a size of the tab 14 (that is, a height of the tab 14) is d3, where 0.15 ≥ d1/d3 ≥ 0.02. If d1/d3 is too large, for example, greater than 0.15, on one hand, it will cause waste of the active material layer 20; on the other hand, it will cause the size of the tab bare foil region 40 of the tab 14 to decrease, thereby causing a size of a welding region 400 available for welding to decrease and a welding process window to decrease. If d1/d3 is too small, for example, less than 0.02, the strengthening effect of the active material layer 20 on the tab 14 is too weak. When d1/d3 is in a reasonable range, it may provide a sufficiently large d1 while ensuring the size of the welding region 400 for welding, and further the reinforcement rib 30 may occupy a sufficient size on the tab coating region 42, so that an ability of the entire tab 14 to prevent being folded is ensured.

Continuing to refer to FIG. 5, further, along the first direction d, the reinforcement rib 30 is spaced apart from a portion of the active material layer 20 located on the current collector body 12, and a spacing distance is d2, where d1 and d2 satisfy 0.95 ≥ d2/d1 ≥ 0.1. That is to say, the reinforcement rib 30 is spaced apart from a body of the negative electrode sheet. If a proportion of d2 in d1 is too large, that is, d2/d1 is too large, for example, greater than 0.95, it will cause a connection region area of the reinforcement rib 30 in the tab coating region 42 to be insufficient, and the strengthening effect on the tab 14 is insufficient; if the proportion of d2 in d1 is too small, that is, d2/d1 is too small, for example, less than 0.1, the reinforcement rib 30 may enter a reaction film region of the body of the negative electrode sheet due to processing errors. Along a stacking direction of the electrode sheet 100, the reinforcement rib 30 is prone to overlap with a projection of the active material layer of the positive electrode sheet, thereby causing issues such as edge lithium plating. Preferably, 0.5 ≥ d2/d1 ≥ 0.2.

In some embodiments, the active material layer 20 is directly coated on a surface of the current collector 10. In other embodiments, referring to FIG. 6, a conductive layer 50 located between the current collector 10 and the active material layer 20 is further included. The conductive layer 50 covers the surface of the current collector 10. The active material layer 20 has a first portion 21 coated on a surface of the conductive layer 50 and a second portion 22 extending beyond the conductive layer 50 along the first direction d and coated on the surface of the current collector 10. The reinforcement rib 30 continuously extends from the tab bare foil region 40 to a surface of the second portion 22, and continuously extends from the surface of the second portion 22 to a surface of the first portion 21. The second portion 22 of the active material layer 20 is relatively thin. If the reinforcement rib 30 only extends to the second portion 22, the second portion 22 is prone to fall off. The reinforcement rib 30 extends to the surface of the first portion 21, that is, extends to the surface of the active material layer 20 on the conductive layer 50. The conductive layer 50 provides certain support to the entire active material layer 20. Relying on the conductive layer 50, the active material layer 20 is avoided from falling off during a process of the reinforcement rib.

In the third embodiment shown in FIG. 7 to FIG. 8, the tab bare foil region 40 is directly connected to the current collector body 12, and the reinforcement rib 30 continuously extends from the tab bare foil region 40 to the surface of the portion of the active material layer 20 located on the current collector body 12. Compared to the first and second embodiments, the active material layer 20 is not cut off in a die cutting step, which reduces the waste of the active material layer 20 and saves costs.

In some embodiments, a ratio of a depth of the reinforcement rib 30 recessed on the active material layer 20 to a thickness from a thickness of the active material layer is f, where 0.85 ≥ f ≥ 0.3. That is to say, the ratio of the depth of the reinforcement rib 30 and the thickness of the portion of the active material layer 20 where it is located is 30% to 85%. That is to say, in a cross-sectional view taken along a direction perpendicular to the first direction d and parallel to the thickness direction, while capturing the reinforcement rib 30 and the active material layer 20, the ratio of the depth of the reinforcement rib 30 to the thickness of the active material layer 20 in this cross-sectional view is 30% to 85%. If the ratio is too small, an effect of the reinforcement rib 30 on the tab 14 is insufficient. If the ratio is too large, it may easily cause an active material in the active material layer 20 to fall off.

It should be noted that referring to FIG. 6, if a thinning region is disposed at an edge of the active material layer 20 close to the tab, the ratios of the depth of the reinforcement rib 30 recessed on each of positions on the active material layer 20 to the thickness of the active material layer 20 where it is located all satisfies 30% to 85%.

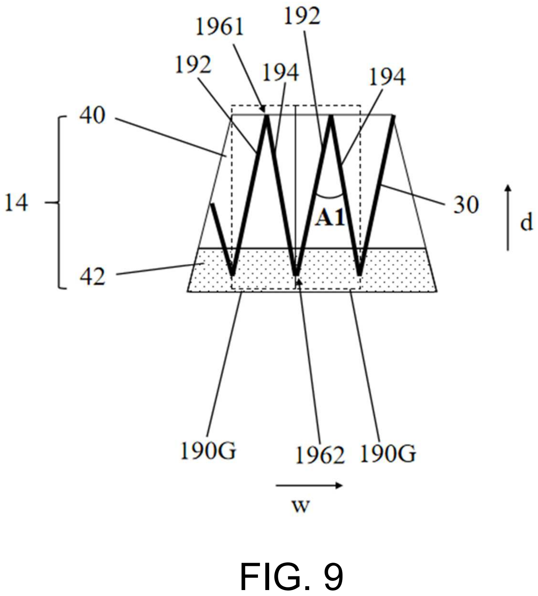

FIG. 9 shows a schematic view of the tab 14 in FIG. 5. In some embodiments, the reinforcement rib 30 is in a fold line shape that overall constitutes a W shape. The fold line-shaped reinforcement rib 30 may pass through the tab 14 along a tab width direction w (perpendicular to the first direction d). The fold line-shaped reinforcement rib 30 has multiple first bending portions 1961 and second bending portions 1962, and the reinforcement rib 30 is bent at each of the first bending portions 1961 and second bending portions 1962. It should be understood that the fold line shape refers to a zigzag line formed by end portions of multiple connecting portions (which may extend along a straight line, for example, a first connecting portion 192 and a second connecting portion 194 as described below, or may adopt other forms, for example, an arc line) sequentially connected by bending portions (for example, the first bending portions 1961 and the second bending portions 1962). The bending portion may be any appropriate structure that may serve an angular bending function to change an extension direction of the fold line, which is not limited in the disclosure. For example, the bending portion may have rounded corners. In some embodiments, a bending angle of each of the first bending portions 1961 and the second bending portions 1962 is A1. A range of the bending angle A1 is 28° to 45°.

Since the triangle has good stability, the fold line-shaped reinforcement rib 30, which is a stability structure similar to a triangle, may provide a good strengthening effect for the tab. However, if the bending angle A1 of the fold line-shaped reinforcement rib 30 is too small, a distance along the tab width direction w within a region of the bending angle A1 will be too small. On one hand, this will cause excessive pressure on the tab 14 within region of the bending angle A1, resulting in stress concentration, which may easily lead to situations such as fracturing of the tab 14. On the other hand, when the distance is too small, the effect of the reinforcement rib 30 on two sides of the bending angle A1 is close to that of the single stripe-shaped reinforcement rib, which will reduce a stability effect of the triangle. If the bending angle A1 is too large, the corresponding tab region within the region of the bending angle A1 becomes wider. At this time, the reinforcement ribs on the two sides of the bending angle A1 are insufficient to form an effective strengthening effect on the tab region therebetween, and it is easy for the tab to be folded downward toward a region of the electrode sheet body.

Therefore, through experimental verification and research, the inventor found that by configuring the range of the bending angle A1 to be 28° to 45°, a more effective strengthening effect may be provided for the tab 14, while effectively avoiding the fracturing of the tab 14. Preferably, the range of the angle A1 is 30° to 35°. This value range of the angle A1 may further provide a more effective strengthening effect for the tab 14, and effectively avoid the fracturing of the tab 14.

A first edge of the tab 14 is connected to the current collector body 12, and a second edge of the tab 14 and the first edge are disposed on two sides of the tab 14 in the first direction d. Each of the reinforcement ribs 30 has at least one first bending portion 1961 and at least one second bending portion 1962. The first bending portion 1961 and the second bending portion 1962 are alternately disposed in the tab width direction w and are connected through the connecting portion, and the tab width direction w is perpendicular to the first direction d. The first bending portion 1961 and the second bending portion 1962 are arc transitions, an inner angle of the first bending portion 1961 faces toward the first edge, and an inner angle of the second bending portion 1962 faces toward the second edge. That is, the first bending portion 1961 and the second bending portion 1962 of the reinforcement rib 30 protrude toward the first direction d and an opposite direction of the first direction d respectively. In this way, the reinforcement rib 30 may provide a more effective strengthening effect for the tab 14 along the first direction d, while effectively avoiding the fracturing of the tab 14.

A maximum width of the first bending portion 1961 and the second bending portion 1962 that are the arc transitions in a radial direction is y1 (y1 is, for example, a size of a portion of an axle line Lx on the first bending portion 1961), and a width of the connecting portion perpendicular to an extension direction thereof is y2, where 2.5 ≥ y1/y2 ≥ 1.2. The reinforcement rib involved in the disclosure may be processed by rolling or stamping, for example, using an embossing roller to roll the tab and the active material layer. When a ratio of y1/y2 is lower than a lower limit value of 1.2, it is difficult to form a smooth chamfer that is an arc transition. For example, when the reinforcement rib 30 is formed by rolling, it is easy to damage the tab 14. If the ratio is higher than an upper limit value of 2.5, wrinkles are easily generated in a region between the adjacent connecting portions (for example, the first connecting portion 192 and the second connecting portion 194) during a rolling process, which is not conducive to subsequent welding of the tab 14.

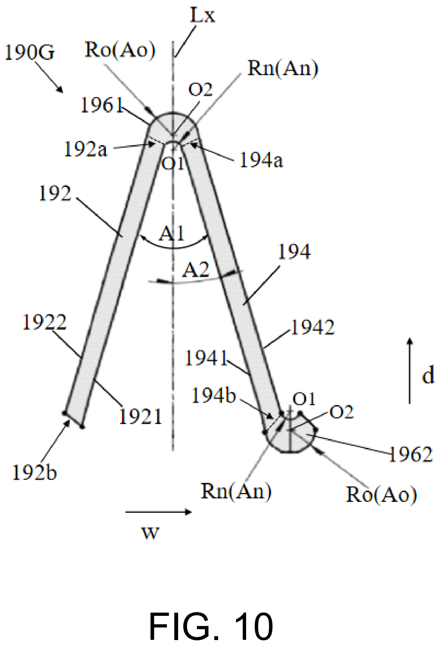

Specifically, the fold line-shaped reinforcement rib 30 may include at least one fold line portion 190G, and the fold line portions 190G are sequentially adjoined along the tab width direction w. FIG. 10 shows a schematic partial enlarged view of a portion of one fold line portion 190G in FIG. 9. In fact, each of the fold line portions 190G framed by dashed lines in FIG. 9 should include one first bending portion 1961 at the top and half of the second bending portion 1962 respectively disposed on the left and right sides of the bottom. FIG. 10 is illustrated with one complete second bending portion 1962 for ease of understanding.

Referring to FIG. 9 and FIG. 10, each of the fold line portions 190G may include the first connecting portion 192 and the second connecting portion 194. The first connecting portion 192 longitudinally extends from one end 192a thereof to another end 192b thereof. The second connecting portion 194 longitudinally extends from one end 194a thereof to another end 194b thereof. The one end 192a of the first connecting portion 192 is connected to the one end 194a of the second connecting portion 194. The another end 194b of the second connecting portion 194 of each of the fold line portions 190G is connected to the another end 192b of the first connecting portion 192 of another adjacent fold line portion 190G. The first connecting portion 192 and the second connecting portion 194 are disposed at the angle A1. The angle A1 may be an angle defined between opposite inner sides 1921 and 1941 of the first connecting portion 192 and the second connecting portion 194. That is, the first connecting portion 192 and the second connecting portion 194 are disposed at the bending angle A1.

More specifically, the one end 192a of the first connecting portion 192 and the one end 194a of the second connecting portion 194 may be connected to each other through the first bending portion 1961. Inner sides of the first bending portion 1961 and the second bending portion 1962 are both set as an inner fillet An, a radius of the inner fillet An is Rn, and a corresponding center is O1. The opposite inner sides 1921 and 1941 of the first connecting portion 192 and the second connecting portion 194 are connected through the inner fillet An. In some embodiments, the radius of the inner fillet An is Rn, where Rn ≥ 0.5 mm. For a value range of 28° to 45° of the corresponding angle A1, an apex (at the first bending portion 1961 and the second bending portion 1962) is prone to become a stress concentration region. By setting the inner sides of the first bending portion 1961 and the second bending portion 1962 as the inner fillet An, and controlling the radius Rn of the inner fillet An to be not lower than 0.5 mm, an issue of stress concentration at the inner sides of the first bending portion 1961 and the second bending portion 1962 may be effectively alleviated.

In addition, outer sides of the first bending portion 1961 and the second bending portion 1962 are both set as outer fillet Ao, a radius of the outer fillet Ao is Ro, and a corresponding center is O2. Back sides 1922 and 1942 of the first connecting portion 192 and the second connecting portion 194 that are far apart from each other are connected through the outer fillet Ao. In some embodiments, the radius of the outer fillet Ao is Ro, where Ro ≥ 1.5 mm. As described above, for the value range of 28° to 45° of the corresponding angle A1, the apex (at the first bending portion 1961 and the second bending portion 1962) is prone to become the stress concentration region. By setting the outer sides of the first bending portion 1961 and the second bending portion 1962 as the outer fillet Ao, and controlling the radius Ro of the outer fillet Ao to be not lower than 1.5 mm, the issue of stress concentration at the outer sides of the first bending portion 1961 and the second bending portion 1962 may be effectively alleviated.

Each of the fold line portions 190G may further include the axle line Lx passing through the centers O1 and O2. The axle line Lx may be perpendicular to the tab width direction w. The first connecting portion 192 and the second connecting portion 194 may be symmetrical with respect to the axle line Lx, and the first bending portion 1961 may be symmetrical with respect to the axle line Lx. An included angle between the first connecting portion 192 or the second connecting portion 194 and the axle line Lx is 1/2 of the angle A1. For example, as shown in FIG. 10, an angle A2 between the inner side 1941 of the second connecting portion 194 and the axle line Lx is 1/2 of the angle A1.

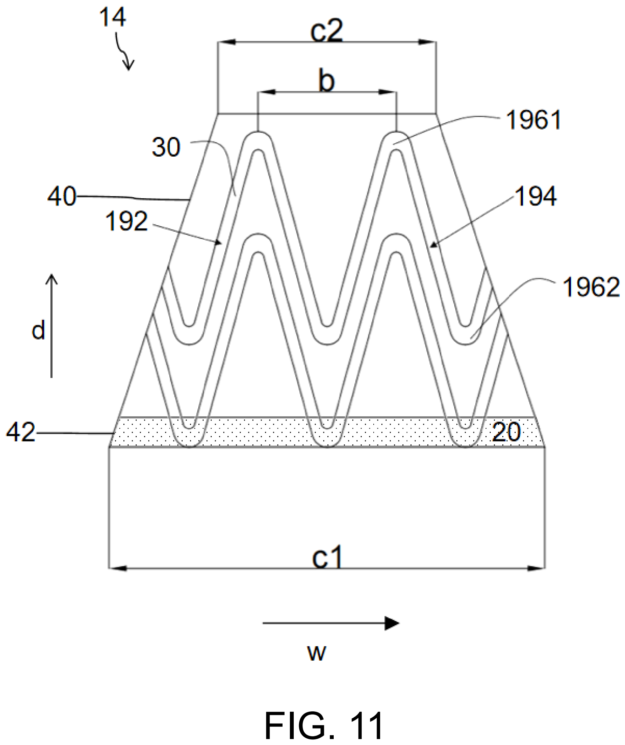

FIG. 11 shows a schematic view of the tab 14 according to another embodiment of the disclosure. A reinforcement rib array is disposed on the tab 14. The reinforcement rib array includes the reinforcement ribs 30 arranged along the first direction d. Every two adjacent reinforcement ribs 30 are spaced apart from each other, and at least one reinforcement rib 30 continuously extends from the tab bare foil region 40 to the surface of the active material layer. Each of the reinforcement ribs 30 may be the same as or similar to the reinforcement rib 30 shown in FIG. 9 to FIG. 10. By disposing the reinforcement rib array on the tab 14, and spacing two adjacent reinforcement ribs 30 apart from each other along the first direction d, a surface of the tab 14 is covered with as many reinforcement ribs 30 as possible, forming a dense reinforcement rib array to obtain a stronger supporting effect for the tab 14.

In some embodiments, a spacing between vertices of the two adjacent first bending portions 1961 of the single reinforcement rib 30 is b. In the tab width direction w, the tab 14 has a maximum width c1 and a minimum width c2. A ratio of c1 to b is in a range of 1.5 to 3, where 3 ≥ c1/b ≥ 1.5, and/or, a ratio of c2 to b is in a range of 1.5 to 3, where 3 ≥ c1/b ≥ 1.5. When the ratio is greater than 1.5, it may ensure that the reinforcement rib array having at least one W-shaped reinforcement rib 30 is formed on the tab 14 after rolling, so as to ensure the strengthening effect. However, if the ratio is too large, for example greater than 3, the reinforcement rib array formed at this time is too dense, and the tab 14 is prone to be crushed.

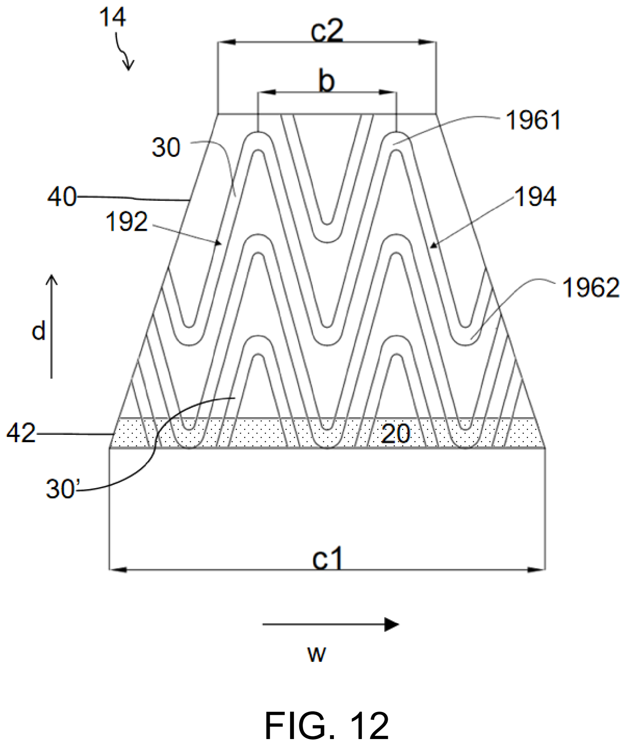

FIG. 12 shows an embodiment different from FIG. 11. In the embodiment shown in FIG. 11, in the tab width direction w, the single continuous reinforcement rib 30 continuously extends from one edge of the tab 14 to another edge without interruption. In the embodiment shown in FIG. 12, along the first direction d, discontinuous reinforcement ribs (which may also be referred to as truncated reinforcement ribs) 30' that are disconnected (not continuously extending from one edge of the tab 14 to another edge along the tab width direction w) are also disposed between the continuous reinforcement rib 30 and upper and lower edges of the tab 14. Compared to the embodiment shown in FIG. 11, by disposing the discontinuous reinforcement ribs 30', the stress concentration at the second bending portion 1962 at a lower end of the continuous reinforcement rib 30 is alleviated, avoiding the active material layer 20 from falling off due to the stress concentration during the rolling process.

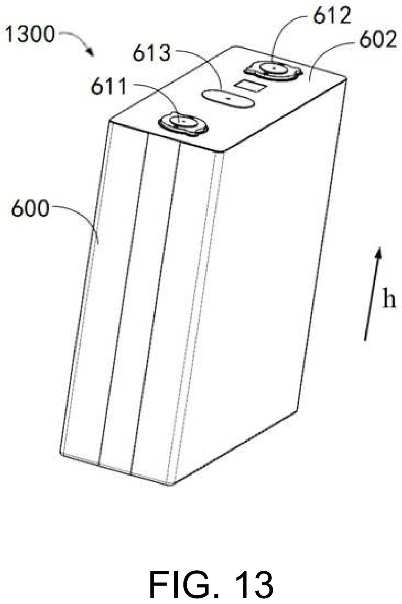

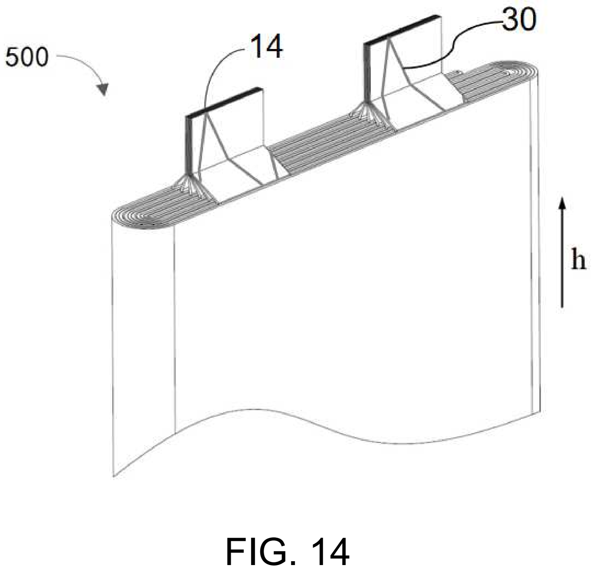

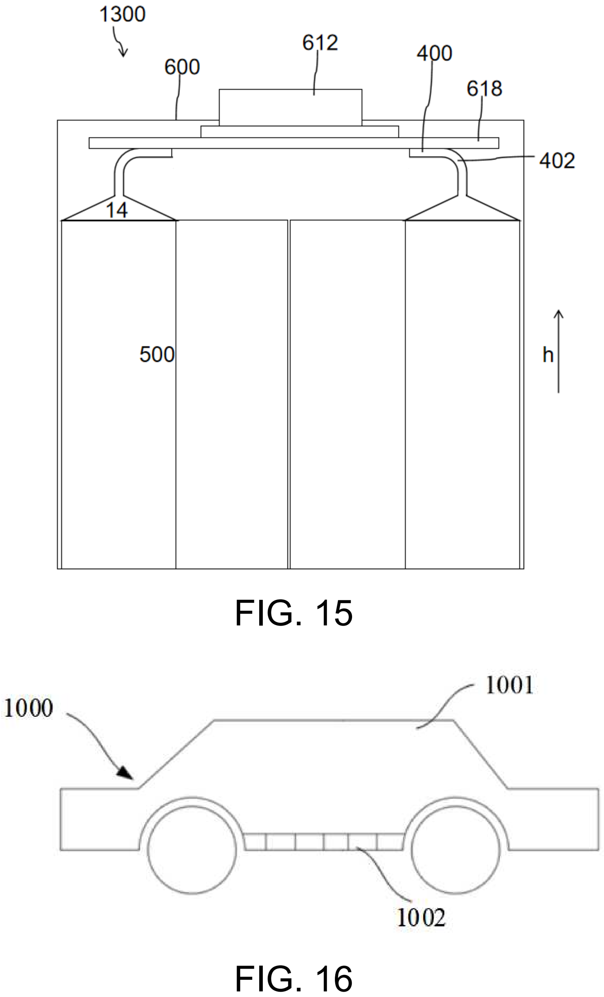

FIG. 13 shows a perspective view of a secondary battery 1300 according to an embodiment of the disclosure. FIG. 14 shows a partial perspective view of an electrode assembly 500 according to an embodiment of the disclosure. FIG. 15 shows a cross-sectional view of the secondary battery 1300 according to an embodiment of the disclosure. The secondary battery 1300 is, for example, a prismatic battery, and the secondary battery 1300 may also be a cylindrical or a pouch battery. The secondary battery 1300 includes a casing 600, a cover plate assembly 602, and the electrode assembly 500. The casing 600 has an opening. The cover plate assembly 602 includes a cover plate body 613 and electrode posts 611 and 612 with opposite polarities disposed on the cover plate body 613 (which, optionally, also includes two adapter plates electrically connected to the electrode posts 611 and 612 respectively). The cross-sectional view, FIG. 15, only shows the electrode post 612 and a corresponding adapter plate 618, and the cover plate body 613 closes the opening and forms an accommodating cavity with the casing 600. The electrode assembly 500 is disposed in the accommodating cavity. The electrode assembly 500 includes any negative electrode sheet in the first to third embodiments. The electrode assembly 500 may include the negative electrode sheet, the separator, and the positive electrode sheet stacked in sequence. An electrolyte may be located between the negative electrode sheet, the separator, and the positive electrode sheet.

It should be noted that the disclosure takes the casing 600 having one opening as an example for illustration. In other embodiments not shown in the drawings, the casing 600 has multiple openings, which may be, for example, configured as two openings located at two ends along a height direction h. Each of the openings is closed by the cover plate assembly 602 respectively. A positive tab and a negative tab are led out from the electrode assembly 500 along opposite directions.

Referring to FIG. 14, the electrode assembly 500 is, for example, a wound body, and the electrode assembly 500 may also be a laminated body. The positive tabs are bundled and fixed together, for example, by welding, and the negative tabs are bundled and fixed together, for example, by welding. Referring to FIG. 15, the secondary battery 1300 includes, for example, two electrode assemblies 500. As shown in FIG. 14, the tab 14 may extend from an entire thickness of the electrode assembly 500, or as shown in FIG. 15, the tab 14 may extend from half the thickness of the electrode assembly.

Referring to FIG. 15 and FIG. 5 together, the tab bare foil region 40 includes the welding region 400 welded to the adapter plate 618 (or without the adapter plate 618, directly welded to the electrode post 612) and a bending region 402 located between the welding region 400 and the current collector body 12. Along the height direction h of the secondary battery 1300, the bending region 402 has a spacing from the active material layer, so as to avoid the active material layer falling off from the current collector 10 due to bending stress. Specifically, when the secondary battery 1300 is in an installed state, along the height direction h, a spacing distance between the bending region 402 and the active material layer is d4, where 10 mm ≥ d4 ≥ 4 mm. If d4 is too small, the distance between the bending region 402 and the edge of the active material layer is too close, the stress generated during a bending process of the tab 14 is easily transmitted to a coating edge of the active material layer along with the reinforcement rib 30, causing the edge of the active material layer to fall off; if d4 is too large, the distance between the bending region 402 and the edge of the active material layer is too far, which may cause the tab 14 to occupy too much height space in the secondary battery 1300, resulting in space waste. The height direction h usually points from the electrode assembly 500 toward the cover plate assembly 602.

The disclosure further provides an electronic device 1000. In the following embodiments, for convenience of description, the electronic device 1000 being a vehicle is taken as an example for description. FIG. 16 shows a schematic view when the electronic device 1000 in the embodiment of the disclosure is a vehicle. A battery pack 1002 is disposed inside the vehicle, and the battery pack 1002 may be disposed at a bottom, head, or tail of a vehicle body 1001. The battery pack 1002 may be used for power supply of the vehicle. For example, the battery pack 1002 may serve as an operating power source of the vehicle. A working portion of the electronic device 1000 is electrically connected to the battery pack 1002 to obtain electrical energy support. The vehicle may be a fuel vehicle, a gas vehicle, or a new energy vehicle. The new energy vehicle may be a battery electric vehicle, a hybrid electric vehicle, or an extended range electric vehicle, etc., but the disclosure is not limited thereto. The battery pack 1002 provides the electrical energy support for driving of the vehicle or operation of electrical elements in the vehicle. However, in some other embodiments, the electronic device 1000 may further be a mobile phone, a portable device, a laptop computer, a ship, a spacecraft, an electric toy, and an electric tool, etc. The spacecraft includes airplanes, rockets, space shuttles, spaceships, etc. The working portion is a unit component that may obtain electrical energy of the battery pack 1002 and perform corresponding work, for example, a blade rotation unit of a fan, a dust collection working unit of a vacuum cleaner, etc. The electric toy includes fixed or mobile electric toys, for example, game consoles, electric car toys, electric ship toys, electric airplane toys, etc. The electric tool includes metal cutting electric tools, grinding electric tools, assembly electric tools, and railway electric tools, for example, electric drills, electric grinders, electric wrenches, electric screwdrivers, electric hammers, impact drills, concrete vibrators, electric planers, etc. The embodiments of the disclosure do not impose special limitations on the above electronic device 1000.

The beneficial technical effects of the disclosure lie in:
In the embodiments of the disclosure, the continuous reinforcement ribs are formed in the tab bare foil region and the active material layer, which may enable the tab bare foil region and the active material layer to be connected into a whole under the force of the reinforcement rib, avoiding forming a weak portion at a junction of the tab bare foil region and the active material layer, causing the tab to be folded at the weak portion.

## Claims

1. A electrode sheet (100), **characterized in that** comprising:
a current collector (10), comprising: a current collector body (12) and a tab (14) extending from the current collector body (12) along a first direction (d);
an active material layer (20), disposed on at least one side of the current collector (10) in a thickness direction; and
a reinforcement rib (30),
wherein
the tab (14) has a tab bare foil region (40) where the active material layer (20) is not disposed, and
in the first direction (d), the reinforcement rib (30) continuously extends from the tab bare foil region (40) to a surface of the active material layer (20).

2. The electrode sheet (100) according to claim 1, wherein
a ratio of a width of the reinforcement rib (30) in a direction perpendicular to an extension path thereof to a depth of the reinforcement rib (30) recessed on the tab (14) is a,
where $6.67 \geq a \geq 1.1 .$

3. The electrode sheet (100) according to claim 1, wherein
along the first direction (d), the tab (14) sequentially has a tab coating region (42) directly connected to the current collector body (12) and the tab bare foil region (40) directly connected to the tab coating region (42),
the active material layer (20) is further disposed above a surface of the tab coating region (42), and
the reinforcement rib (30) continuously extends from the tab bare foil region (40) to a portion of the active material layer (20) located on the tab coating region (42).

4. The electrode sheet (100) according to claim 1, wherein
the tab bare foil region (40) is directly connected to the current collector body (12), and
the reinforcement rib (30) continuously extends from the tab bare foil region (40) to a portion of the active material layer (20) located on the current collector body (12).

5. The electrode sheet (100) according to claim 3, wherein
along the first direction (d), a size of the tab coating region (42) is d1, and a size of the tab (14) is d3,
where $0.15 \geq d 1 / d 3 \geq 0.02 .$

6. The electrode sheet (100) according to claim 3, wherein
along the first direction (d), a size of the tab coating region (42) is d1, the reinforcement rib (30) is spaced apart from a portion of the active material layer (20) located on the current collector body (12), and a spacing distance is d2,
where $0.95 \geq d 2 / d 1 \geq 0.1 .$

7. The electrode sheet (100) according to claim 6, wherein $0.5 \geq d 2 / d 1 \geq 0.2 .$

8. The electrode sheet (100) according to claim 3, further comprising:
a conductive layer (50), covering a surface of the current collector (10) and located between the active material layer (20) and the current collector (10),
wherein the active material layer (20) has a first portion (21) coated on a surface of the conductive layer (50) and a second portion (22) extending beyond the conductive layer (50) along the first direction (d),
the second portion (22) is coated on the surface of the current collector (10),
the reinforcement rib (30) continuously extends from the tab bare foil region (40) to a surface of the second portion (22), and continuously extends from the surface of the second portion (22) to a surface of the first portion (21).

9. The electrode sheet (100) according to claim 1, wherein
a ratio of a depth of the reinforcement rib (30) recessed on the active material layer (20) to a thickness from a thickness of the active material layer (20) is f,
where $0.85 \geq f \geq 0.3 .$

10. The electrode sheet (100) according to claim 1, wherein
a first edge of the tab (14) is connected to the current collector body (12),
a second edge of the tab (14) and the first edge are disposed on two sides of the tab (14) in the first direction (d);
each of the reinforcement ribs (30) has at least one first bending portion (1961) and at least one second bending portion (1962), the first bending portion (1961) and the second bending portion (1962) are alternately disposed in a tab width direction (w) and are connected to each other through a connecting portion, and the tab width direction (w) is perpendicular to the first direction (d);
wherein the first bending portion (1961) and the second bending portion (1962) are arc transitions, an inner angle of the first bending portion (1961) faces toward the first edge, and an inner angle of the second bending portion (1962) faces toward the second edge;
a maximum width of the arc transition in a radial direction is y1, and a width of the connecting portion perpendicular to an extension direction of the connecting portion is y2,
where $2.5 \geq y 1 / y 2 \geq 1.2 .$

11. The electrode sheet (100) according to claim 10, wherein
a spacing between vertices of the two adjacent first bending portions (1961) of the single reinforcement rib (30) is b,
wherein in the tab width direction (w), the tab (14) has a maximum width c1 and a minimum width c2,
wherein $3 \geq c 1 / b \geq 1.5 ,$
and/or $3 \geq c 2 / b \geq 1.5 .$

12. A secondary battery (1300), **characterized in that** comprising:
a casing (600), having at least one opening;
at least one cover plate assembly (602), comprising a cover plate body (613) and an electrode post (611, 612) disposed on the cover plate body (613), wherein the cover plate body (613) closes the opening and forms an accommodating cavity with the casing (600);
an electrode assembly (500), disposed in the accommodating cavity, wherein the electrode assembly (500) comprises the electrode sheet (100) according to any one of claims 1-11, the tab bare foil region (40) comprises a welding region (400) and a bending region (402), the welding region (400) is welded to the electrode post (611, 612), or welded to an adapter plate (618) electrically connected to the electrode post (612), and the bending region (402) is located between the welding region (400) and the current collector body (12);
wherein
along a height direction of the secondary battery (1300), the bending region (402) is spaced apart from the active material layer (20).

13. The secondary battery (1300) according to claim 12, wherein
along the height direction of the secondary battery (1300), a spacing distance between the bending region (402) and the active material layer (20) is d4,
where $10 mm \geq d 4 \geq 4 mm .$
